# EUROPÄISCHE PATENTANMELDUNG

(11) **EP 4 654 154 A1**
(43) Veröffentlichungstag der Anmeldung: **26.11.2025**
(21) Anmeldenummer: 24178041.0
(22) Anmeldetag: 24.05.2024
(51) Int. Cl.: G06V 10/774, G06V 20/56

(54) **VERFAHREN UND EINE VORRICHTUNG ZUM BEREINIGEN EINES BILDDATENSATZES**

(71) Anmelder: Robert Bosch GmbH, 70442 Stuttgart (DE)
(72) Erfinder: Remenyi, Istvan, 2890 Tata (HU); Czako, Patrik Roland, 5126 Jászfényszaru (HU); Peto, Mark, 1027 Budapest (HU)

(57) **Zusammenfassung**

Es wird vorgeschlagen ein Verfahren und eine Vorrichtung (100) zum Bereinigen eines Bilddatensatzes, der zum Trainieren und/oder Validieren und/oder Testen eines maschinellen Lernmodells verwendet wird, das Verfahren aufweisend die Schritte:
- Bereitstellen (S1) des Bilddatensatzes, aufweisend eine Vielzahl von Bildern;
- Vergleichen (S2) eines, insbesondere vorbestimmten, Vergleichsbildes der eine Vielzahl von Bildern jeweils mit zumindest einem Teil der restlichen Bilder der Vielzahl von Bildern durch Anwenden eines Intersection-over-Union-Filters;
- basierend auf dem Vergleich, Ermitteln (S3) mindestens eines hinsichtlich des Vergleichsbildes redundanten Bildes in zumindest dem Teil der restlichen Bilder der Vielzahl von Bildern; und
- Bereinigen (S4) des Bilddatensatzes durch Entfernen des mindestens einen redundanten Bildes aus der Vielzahl von Bildern.

## Beschreibung

Die Erfindung betrifft ein Verfahren und eine Vorrichtung zum Bereinigen eines Bilddatensatzes, der zum Trainieren und/oder Validieren und/oder Testen eines maschinellen Lernmodells verwendet wird. Die Erfindung betrifft ferner ein Verfahren zum Trainieren und/oder Validieren und/oder Testen eines maschinellen Lernmodells, das zum Klassifizieren und/oder Segmentieren von Bilddaten insbesondere bei automatischen Entpackungsmaschinen und/oder bei Fahrzeugen mit mindestens einer autonomen Fahrfunktion und/oder bei der automatischen optischen Inspektion verwendbar ist.

### Stand der Technik

In der Automatisierungstechnik stellt die Entwicklung von automatischen Entpackungsmaschinen eine Herausforderung dar, vor allem durch die Notwendigkeit, große Datenmengen zu verarbeiten. Diese Daten stammen typischerweise aus Kameradatenströmen, die in schneller Folge eine Vielzahl von Bildern liefern. Ein Problem ist die Bewältigung der inhärenten Redundanz dieser Bildsequenzen. Um effiziente und präzise Prototypen für Inhaltserkennungssysteme zu entwickeln, ist daher eine semantische Redundanzfilterung gewünscht. Diese Technik hilft, unnötige Wiederholungen in den Daten zu identifizieren und zu eliminieren, die sich nicht nur aus der Sequenzialität, sondern auch aus den überlappenden inhaltlichen Merkmalen der Bilder ergeben.

Die semantische Redundanzfilterung, die in der Vergangenheit hauptsächlich im Bereich der Bildklassifikation Anwendung fand, nutzt heute Methoden wie das agglomerative Clustering im latenten Raum. Dieser Ansatz ermöglicht es, die Bedeutung und den Informationsgehalt einzelner Datenproben im Kontext des gesamten Datensatzes zu analysieren und entsprechend zu gewichten. Solche Techniken sind entscheidend für die Reduzierung von Datenmengen, ohne dabei relevante Informationen zu verlieren.

Ferner ist die Behandlung von Inter-Pixel-Redundanz bekannt, wie zum Beispiel Methoden zur Pufferzuweisung, die dazu dienen, Überlappungen auf Pixelebene zu minimieren. Ferner sind bereits einige Inhaltsbewahrungstechniken wie Perceptual Hashing und Deep Perceptual Hashing bekannt, die darauf abzielen, die wesentlichen Merkmale der Bilder unter Beibehaltung der Unabhängigkeit von visuellen Veränderungen wie Rotation, Skalierung oder Kompression zu schützen.

Ferner ist die sogenannte Nicht-Max-Unterdrückung in der Objekterkennung bekannt, oftmals gekoppelt mit der Analyse von Validierungsmetriken, die verschiedene Überschneidungsschwellenwerte bei einer festen Klassifizierungskonfidenz berücksichtigen. Diese Techniken sind besonders nützlich für neuronale Netzwerke, die in der Einzelbild-Objekterkennung eingesetzt werden, und unterstützen die präzise Klassifizierung von Objekten während des Trainings auf ausgewählten Regions of Interest.

Auch wenn bereits einige Ansätze bekannt sind, besteht weiterhin Entwicklungspotenzial.

Es ist daher eine Aufgabe der Erfindung, ein dahingehend verbessertes Verfahren und/oder eine Vorrichtung anzugeben.

Die Aufgabe wird gelöst durch ein Verfahren gemäß den Merkmalen des Patentanspruchs 1. Die Aufgabe wird ferner gelöst durch eine Vorrichtung gemäß den Merkmalen des Patentanspruchs 10.

### Offenbarung der Erfindung

Gemäß einem ersten Aspekt wird vorgeschlagen, ein Verfahren zum Bereinigen eines Bilddatensatzes, der zum Trainieren und/oder Validieren und/oder Testen eines maschinellen Lernmodells verwendet wird, das Verfahren aufweisend die Schritte:
- Bereitstellen des Bilddatensatzes, aufweisend eine Vielzahl von Bildern;
- Vergleichen eines, insbesondere vorbestimmten, Vergleichsbildes der eine Vielzahl von Bildern jeweils mit zumindest einem Teil der restlichen Bilder der Vielzahl von Bildern durch Anwenden eines Intersection-over-Union-Filters;
- basierend auf dem Vergleich, Ermitteln mindestens eines hinsichtlich des Vergleichsbildes redundanten Bildes in zumindest dem Teil der restlichen Bilder der Vielzahl von Bildern; und
- Bereinigen des Bilddatensatzes durch Entfernen des mindestens einen redundanten Bildes aus der Vielzahl von Bildern.

Es versteht sich, dass die erfindungsmäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Gemäß einem zweiten Aspekt wird vorgeschlagen, eine Vorrichtung zum Bereinigen eines Bilddatensatzes, der zum Trainieren und/oder Validieren und/oder Testen eines maschinellen Lernmodells verwendet wird, wobei die Vorrichtung eine Auswerte- und Recheneinrichtung aufweist, die dazu ausgebildet ist, die folgenden Schritte auszuführen:
- Bereitstellen des Bilddatensatzes, aufweisend eine Vielzahl von Bildern;
- Vergleichen eines, insbesondere vorbestimmten, Vergleichsbildes der eine Vielzahl von Bildern jeweils mit zumindest einem Teil der restlichen Bilder der Vielzahl von Bildern durch Anwenden eines Intersection-over-Union-Filters;
- basierend auf dem Vergleich, Ermitteln mindestens eines hinsichtlich des Vergleichsbildes redundanten Bildes in zumindest dem Teil der restlichen Bilder der Vielzahl von Bildern; und
- Bereinigen des Bilddatensatzes durch Entfernen des mindestens einen redundanten Bildes aus der Vielzahl von Bildern.

Die für das Verfahren gemachten Ausführungen gelten für die Vorrichtung entsprechend. Dabei versteht es sich, dass sprachliche Abwandlungen von verfahrensmäßig formulierten Merkmalen nach sprachüblicher Praxis für die Vorrichtung umformulierbar sind, ohne dass derartige Formulierungen explizit hier aufgeführt werden müssen.

Auch wenn aktives Lernen für unbeschriftete Daten verwendet wird, kann eine zusätzliche Wichtigkeitsklassifizierung mit geringerem Rechenaufwand verwendet werden, um die semantisch redundanten Daten zu bereinigen. Unter der Annahme, dass ein Datenstrom nicht aus einem Open-World-Anwendungsfall stammt (Bilddaten sind Teil eines geschlossenen Systems) und Bilder von Szenen mit einem feststehenden bzw. unveränderlichen Bildhintergrund erfasst werden, kann derart ein sich ggf. verändernder Bildvordergrund untersucht und auf Redundanzen hin analysiert werden. Die Ausnutzung eines vereinfachten Vorhersageraums, beispielsweise von Objekt-Patch-Annotationen, in dem sich nur der Bildvordergrund verändert, macht den Schnittpunkt-über-Einheit-Vergleich (Intersection-over-Union (loU)) bei der Vorverarbeitung der Bilddaten verfügbar.

Mit dem vorliegenden Verfahren und der vorliegenden Vorrichtung können beliebige, semantisch redundanzfreie Datensätze zum Trainieren und/oder Validieren und/oder Testen von maschinellen Lernmodellen erstellt werden. Dabei wird das Intersection-over-Union (loU)-Maß zum Bereinigen der initialen Bilddatenmenge verwendet.

Beispielsweise können vorliegend zwei Bilder mit einem höchsten loU-Maß innerhalb derselben Klasse miteinander verglichen werden. Auf diese Weise können vorzugsweise zwei Bilder als ähnlich und damit redundant betrachtet werden, wenn mindestens ein Objekt in dem miteinander verglichenen Bildpaar die Filterkriterien der loU nicht erfüllt.

Dabei können relevante Schlüsselbilder bzw. Vergleichsbilder ausgewählt werden, auf deren Basis der Vergleich erfolgen soll. Auf diese Weise können semantisch ähnliche und somit zueinander redundante, relevante Schlüsselbilder ausgewählt werden, um diese insbesondere automatisch aus dem Datensatz bzw. auch aus Datensatzsplits auszuschließen. Dadurch wird die Metrik robuster.

Die wichtigste Neuerung des loU-basierten semantischen Bildredundanzfilters gegenüber datengesteuerten aktiven Lösungen kann für Datensätze betrachtet werden, die einen statischen oder quasi statischen Bildhintergrund aufweisen, so dass sich der Filterungsprozess auf eine Dynamik der sich im Bildvordergrund befindlichen Objekte zwischen den miteinander zu vergleichenden Bildern konzentrieren kann. Wenn diese Annahme vorausgesetzt wird, erweist sich der loUbasierte, semantische Redundanzfilter beispielsweise als effizienter und effektiver als die Einführung neuer Labels für semantische Redundanz in der Erkennung.

Intersection-over-Union (loU) ist eine Metrik, die in der Computer Vision verwendet wird, insbesondere bei Aufgaben wie Objekterkennung und/oder Segmentierung. luO misst die Überschneidung zwischen zwei Bereichen - insbesondere zwischen einem vorhergesagten Bereich (durch ein Modell) und einem wahren Bereich (tatsächliche Position des Objekts) - um die Genauigkeit der Vorhersage zu bewerten. Ein loU-Wert von 1 bedeutet eine perfekte Übereinstimmung, während ein Wert von 0 bedeutet, dass sich die Vorhersage und der wahre Bereich nicht überlappen. Dabei kann beispielsweise ein Schwellenwert für loU (zum Beispiel 0,5) festgelegt werden, um zu entscheiden, ob eine Vorhersage als korrekt anzusehen ist. Vorliegend kann auf Basis dieses Schwellenwertes vorzugsweise entschieden werden, ob ein Bild als ähnlich zu dem Vergleichsbild, und damit als redundant, oder als unähnlich zu dem Vergleichsbild, und damit als nicht redundant, betrachtet wird.

In einem weiteren Aspekt wird vorgeschlagen, dass das Anwenden des Intersection-over-Union-Filters ein Vergleichen mindestens eines Keyframes, der mindestens ein Objekt in dem mindestens einen Vergleichsbild umfasst, mit einem Keyframe, der vorzugsweise an derselben Position wie in dem Vergleichsbild gesetzt wird, des jeweils zu vergleichenden Bildes der restlichen Bilder aufweist.

In der Computer Vision wird ein Keyframe vorzugsweise als ein repräsentativer Frame innerhalb einer Sequenz von Bildern oder Videos definiert, der wichtige oder signifikante Informationen für die Verarbeitungsaufgaben aufweist. Bei der Objektverfolgung und ähnlichen Aufgaben kann ein Keyframe verwendet werden, um wichtige Positionen eines Objekts im Video festzulegen. Die Beziehung zwischen Keyframes und Intersection-over-Union (loU) in der Computer Vision, speziell in der Videoanalyse oder Objektverfolgung, ergibt sich daraus, die Genauigkeit der Objekterkennung und -verfolgung über mehrere Frames hinweg zu bewerten. Keyframes helfen dabei, signifikante Punkte in der Videosequenz zu identifizieren, an denen die loU-Metrik angewendet werden kann, um die Genauigkeit der Objektverfolgung zu bewerten. Die loU wird berechnet, um zu messen, wie gut das verfolgte Objekt in diesen Keyframes mit den manuell markierten Ground-Truth-Daten übereinstimmt.

In einem weiteren Aspekt wird vorgeschlagen, dass das Bereitstellen des Bilddatensatzes ein vorheriges Auswählen von als das mindestens eine Vergleichsbild dienenden Schlüsselbildern aufweist, wobei die Schlüsselbilder redundant sein könnten.

Die Auswahl visuell relevanter Schlüsselbilder trägt zur Bereinigung des Bilddatensatzes und der Beibehaltung möglicher redundanter Bilder bei. Aus dem bereitgestellten, vorzugsweise beschrifteten bzw. gelabelten Bilddatensatz, der zur Objekterkennung genutzt werden kann, und in dem Bilder durch das Setzen von Begrenzungsrahmen bzw. Keyframes, die Objekte in der Szene kennzeichnen, gelabert werden, werden bevorzugt relevante Schlüsselbilder ausgewählt, die redundant sein könnten. Im einfachsten Fall könnte dies bedeuten, dass einige der nicht erwünschten redundanten Bilder manuell ausgewählt werden, aber auch andere Redundanzmaßnahmen könnten zur Auswahl relevanter Schlüsselbilder verwendet werden. Dabei kann vorzugsweise ein bereits bereinigter Bilddatensatz betrachtet werden. Zudem ist es möglich Teilmengen in einem beliebigen Verhältnis aus dem bereinigten Bilddatensatz zu erstellen, z. B. dreifache Datenaufteilung in 60 % Trainingsdaten, 20 % Validierungsdaten und 20 % Testdaten. Die bevorzugt ausgewählten, relevanten Schlüsselbilder werden als die Vergleichsbilder mit dem restlichen Bildern des vorzugsweise vorbereinigten Bilddatensatz oder einer beliebigen Untergruppe des Bilddatensatzes vergleichen. Die Bilder des Bilddatensatzes umfassen vorzugsweise jeweils ein statisches Hintergrundbild mit sich dynamisch zwischen den sequenziellen Bildern verändernden Vordergrundobjekten.

In einem weiteren Aspekt wird vorgeschlagen, dass das Ermitteln des mindestens einen hinsichtlich des Vergleichsbildes redundanten Bildes in zumindest dem Teil der restlichen Bilder der Vielzahl von Bildern ein Abgleichen der jeweiligen Bilder mit einem vorbestimmten Schwellenwert bzw. Änhlichkeitsmaß aufweist.

Vorliegend erfolgt die Anwendung des loU-Filters vorzugsweise pro gemeinsame Klasse auf relevante Schlüsselbilder und alle restlichen Bilder. Der loU-Filter ist vorzugsweise fest eingestellt, insbesondere mit einem Schwellenwert zwischen 0,0 und 1,0, beispielswiese 0,9. Dabei werden vorzugsweise relevante Schlüsselbilder verwendet. Dann wird über alle Klassen iteriert, wobei für jede Klasse und vorzugsweise für jedes relevante Schlüsselbild ein Ähnlichkeitsmaß zu einem jeweils anderen Bild berechnet wird. Dabei werden vorzugsweise pro Schlüsselbild die darin umfassten Objekte mit den jeweiligen Objekten der zu vergleichenden Bildern verglichen. Dies kann auch nur für eine Teilmenge von Bildern durchgeführt werden. Wenn mindestens ein überlappendes Objekt gefunden wird, werden die jeweils verglichenen Bilder als semantisch redundant betrachtet.

In einem weiteren Aspekt wird vorgeschlagen, dass das mindestens eine Vergleichsbild aus einer Teilmenge des Bilddatensatzes ausgewählt wird, und das Vergleichsbild mit Bildern einer anderen Teilmenge des Bilddatensatzes verglichen wird.

Besonders bevorzugt erfolgt ein Vergleich der vorgefilterten Bilder mit dem bereinigten Bilddatensatz. Dieser Schritt bezieht sich vorzugsweise auf die Zuordnung der redundanten Bilder zu einer anderen Teilmenge als die untersuchten Teilmengen des Bilddatensatzes.

Das Vergleichen des, insbesondere vorbestimmten, Vergleichsbildes der eine Vielzahl von Bildern jeweils mit zumindest einem Teil der restlichen Bilder der Vielzahl von Bildern durch Anwenden eines Intersection-over-Union-Filters; und das Ermitteln mindestens eines hinsichtlich des Vergleichsbildes redundanten Bildes in zumindest dem Teil der restlichen Bilder der Vielzahl von Bildern basierend auf dem Vergleich kann vorzugsweise für mehrere Teilmengen des Bilddatensatzes separat oder untereinander vergleichend durchgeführt werden. So kann das Vergleichen und Ermitteln vorzugsweise für Paare von Teilmengen der Bilddaten durchgeführt werden, z. B. im Falle einer Dreiteilung für die Paare aus Training-Validierungs-Daten, Training-Test-Daten und Validierung-Test-Daten. Wenn beispielsweise die Teilmengen der Trainingsbilddaten und der Validierungsbilddaten miteinander verglichen und relevante Schlüsselbilder aus der Trainingsteilmenge ausgewählt werden, können die zueinander ähnlichen und somit redundanten Bilder aus der Validierungsteilmenge herausgenommen werden, um die Validierungsteilmenge von semantischen Ähnlichkeiten zu bereinigen.

Es kann auch eine Anwendung der Cut-off-Schwelle für die Aufteilung des Bilddatensatzes eingesetzt werden, um beispielsweise neue Teilmengen aus dem Bilddatensatz zu bilden. Die neu gebildeten Teilmengen können von einem ursprünglichen Verhältnis abweichen, z. B. 60%-20%-20% Cut-offs. Daher ist dieser Schritt dafür bevorzugt, die nicht redundanten Datensatzproben nach dem Zufallsprinzip mit den ursprünglichen Abschneide-Verhältnissen erneut zu filtern, bevor sie für das Trainieren und/oder Testen und/oder Validieren eines maschinellen Lernmodells verwendet werden. Bei einer nicht exakten Bildreihenfolge, d.h. bei Bilder, die nicht aufeinanderfolgend sind, funktioniert das vorliegende Verfahren dennoch als Redundanzfilter.

In einem weiteren Aspekt wird vorgeschlagen, dass die Vielzahl von Bilddaten sequenziell durch einen bildgebenden Sensor erfasst werden. "Sequenziell" bezieht sich auf Bilddaten, die in einer bestimmten Reihenfolge oder Abfolge erfasst werden.

Die "sequenzielle Verarbeitung" beschreibt die Verarbeitung von Bilddaten in der Reihenfolge ihres Eintreffens oder ihrer Erstellung. Der mindestens eine bildgebende Sensor kann eine Kamera, einen Ultraschallsensor, einen Lidarsensor, einen Radarsensor oder ähnliches aufweisen.

In einem weiteren Aspekt wird vorgeschlagen, ein Verfahren zum Trainieren und/oder Validieren und/oder Testen eines maschinellen Lernmodells, das zum Klassifizieren und/oder Segmentieren von Bilddaten insbesondere, jedoch nicht einschränkend, bei automatischen Entpackungsmaschinen und/oder bei Fahrzeugen mit mindestens einer autonomen Fahrfunktion und/oder bei der automatischen optischen Inspektion verwendbar ist, das Verfahren aufweisend, Trainieren und/oder Validieren und/oder Testen des maschinellen Lernmodells auf Basis eines gemäß dem vorliegend beanspruchten Verfahren bereinigten Bilddatensatzes.

Es versteht sich, dass das Verfahren zum Trainieren und/oder Validieren und/oder Testen eines maschinellen Lernmodells, das zum Klassifizieren und/oder Segmentieren von Bilddaten eingesetzt wird, auch in anderen technischen Bereichen verwendet werden kann. Beispielhaft ist hier die Medizintechnik, die Sicherheitstechnik, die Überwachungstechnik, die Authentifizierungstechnik, die Automatisierungstechnik, die Robotik oder ähnliches zu nennen.

Das Verfahren zum Bereinigen des Datensatzes kann grundsätzlich dort eingesetzt werden, wo Bilddaten in großer Menge, ggf. sequenziell in schneller Abfolge, erfasst werden. Das Verfahren ist insbesondere dann vorteilhaft, wenn ein Bildhintergrund in den Bilddaten unverändert bleibt, und Änderungen in einem Bildvordergrund oder einer vorgelagerten Bildebene auftreten.

In einem weiteren Aspekt ist auch ein Steuergerät beansprucht, das in einem Fahrzeug mit einer autonomen Fahrfunktion und/oder einem Robotiksystem und/oder einer industriellen Maschine umfasst ist, und auf dem ein maschinelles Lernmodell, das gemäß dem vorliegenden Verfahren trainiert und/oder validiert und/oder getestet ist, in einem seiner Aspekte ausführbar ist.

In einem weiteren Aspekt ist ein Computerprogramm mit Programmcode beansprucht, um zumindest Teile des vorliegenden Verfahrens in einem seiner Aspekte auszuführen, wenn das Computerprogramm auf einem Computer ausgeführt wird. Mit anderen Worten wird ein Computerprogramm(-produkt), umfassend Befehle, die bei der Ausführung des Programms durch einen Computer diesen veranlassen, das Verfahren/die Schritte des Verfahrens in einem seiner Aspekte auszuführen.

In einem weiteren Aspekt ist ein computerlesbarer Datenträger mit Programmcode eines Computerprogramms vorgeschlagen, um zumindest Teile des vorliegenden Verfahrens in einem seiner Aspekte auszuführen, wenn das Computerprogramm auf einem Computer ausgeführt wird. Mit anderen Worten betrifft die Erfindung ein computerlesbares (Speicher-) Medium, umfassend Befehle, die bei der Ausführung durch einen Computer diesen veranlassen, das Verfahren/die Schritte des Verfahrens in einem seiner Aspekte auszuführen.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: ein schematisches Flussdiagramm eines Ausführungsbeispiels des Verfahrens;
- Fig. 2: ein schematisches Blockdiagramm eines Ausführungsbeispiels des Verfahrens;
- Fig. 3: eine schematische Visualisierung redundanter Bilder; und
- Fig. 4: eine schematische Visualisierung nicht-redundanter Bilder.

In den Figuren der Zeichnungen bezeichnen gleiche Bezugszeichen gleiche oder funktionsgleiche Elemente, Bauteile oder Komponenten, soweit nichts Gegenteiliges angegeben ist.

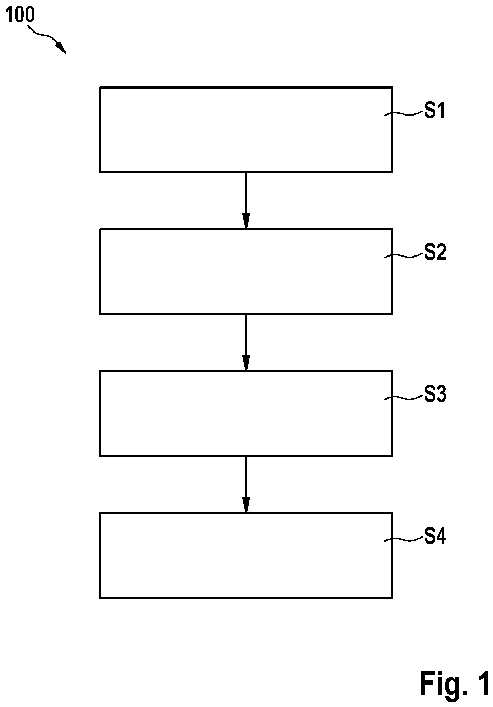

Fig. 1 zeigt ein schematisches Flussdiagramm eines Verfahrens zum Bereinigen eines Bilddatensatzes, der zum Trainieren und/oder Validieren und/oder Testen eines maschinellen Lernmodells verwendet wird.

Das Verfahren kann in einer beliebigen Ausführungsform zumindest teilweise durch eine Vorrichtung 100 ausgeführt werden, die hierzu mehrere nicht näher dargestellte Komponenten, beispielsweise eine oder mehrere Bereitstellungseinrichtungen und/oder mindestens eine Auswerte- und Recheneinrichtung umfassen kann. Es versteht sich, dass die Bereitstellungseinrichtung gemeinsam mit der Auswerte- und Recheneinrichtung ausgebildet sein kann, oder von dieser unterschiedlich sein kann. Ferner kann die Vorrichtung 100, die ein Teil eines Systems sein kann, eine Speichereinrichtung und/oder eine Ausgabeeinrichtung und/oder eine Anzeigeeinrichtung und/oder eine Eingabeeinrichtung umfassen.

Das computerimplementierte Verfahren umfasst mindestens die folgenden Schritte:
In einem Schritt S1 erfolgt ein Bereitstellen des Bilddatensatzes, aufweisend eine Vielzahl von Bildern.

In einem Schritt S2 erfolgt ein Vergleichen eines, insbesondere vorbestimmten, Vergleichsbildes der eine Vielzahl von Bildern jeweils mit zumindest einem Teil der restlichen Bilder der Vielzahl von Bildern durch Anwenden eines Intersection-over-Union-Filters.

In einem Schritt S3 erfolgt ein basierend auf dem Vergleich, Ermitteln mindestens eines hinsichtlich des Vergleichsbildes redundanten Bildes in zumindest dem Teil der restlichen Bilder der Vielzahl von Bildern.

In einem Schritt S4 erfolgt ein Bereinigen des Bilddatensatzes durch Entfernen des mindestens einen redundanten Bildes aus der Vielzahl von Bildern.

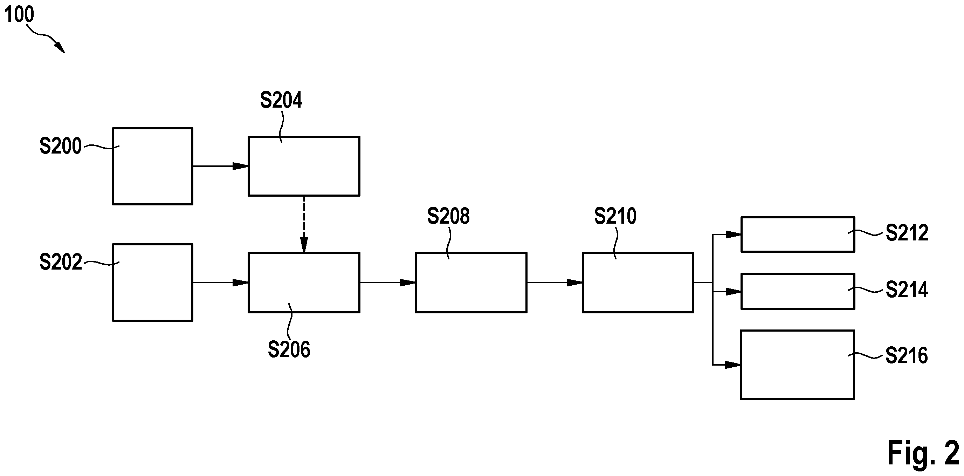

Fig. 2 zeigt ein schematisches Blockdiagramm eines Ausführungsbeispiels des vorliegenden Verfahrens. In einem Schritt S200 wird eine Teilmenge eines Bilddatensatzes, die zum Training verwendet werden soll, bereitgestellt. In einem Schritt S202 wird eine Teilmenge eines Bilddatensatzes, die zum Validieren verwendet werden soll, bereitgestellt. Bevorzugt erfolgt in einem Schritt S204, ein visuelles Selektieren von nicht relevanten Keyframes, um derart eine vorbereinigte Teilmenge bereitzustellen. In einem Schritt S206 erfolgt für die beiden Teilmengen das Anwenden eines loU-Filters pro gemeinsame Klasse für mindestens ein Vergleichsbild mit allen restlichen Bildern der jeweils zu vergleichenden Teilmenge.

In einem optionalen Schritt S208 erfolgt ein Vergleich der gefilterten Bilder mit dem in der bereinigten Teilmenge des Bilddatensatzes. In einem optionalen Schritt S210 erfolgt das Anwenden eines Cut-Off-Schwellenwertes, um so eine neue Teilmengen-Aufteilung zu bilden. Derart kann in einem Schritt S212 und S214 eine neue Trainingsdaten-Teilmenge sowie eine neue Validierungsdaten-Teilmenge bereitgestellt werden. Ferner kann eine Teilmenge an Bilddaten, die als redundante Bilder erkannt wurden in einem optionalen Schritt S216 bereitgestellt werden.

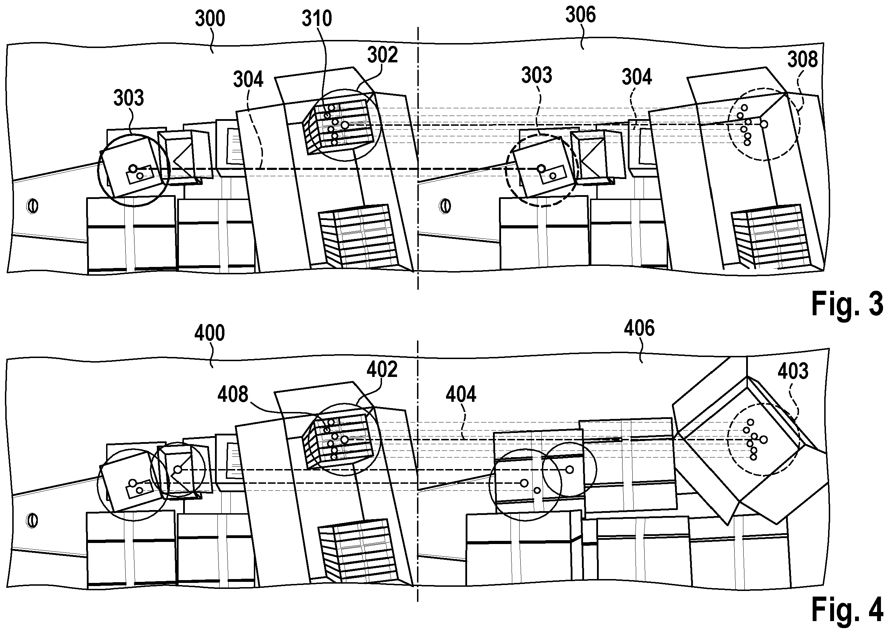

Die Fig. 3 und 4 zeigen schematische Veranschaulichungen von Bildern eines Bilddatensatzes, der gemäß dem Verfahren bereinigt bzw. gefiltert bzw. von redundanten Bildern befreit werden soll. Die Bilder des Bilddatensatzes werden dabei vorzugsweise sequentiell gesammelt. Die Bilder stammen beispielsweise von einer Kamera, die gemäß einer vorbestimmten Bildrate sequenzielle Bilder einer Szene liefert. Ein möglicher Redundanzfaktor besteht beispielsweise darin, dass sich die aufeinanderfolgenden Bilder aufgrund der Beschaffenheit der Szene, die beispielsweise mit einer Bildrate von 30 Bildern pro Sekunde abgetastet wird, von Bild zu Bild nicht tiefreifend verändern.

Im gezeigten Beispiel wurden Bilder einer Szene, vorliegend einer Lagerhalle erfasst. Die Szene umfasst Verpackungsmaterial, z.B. Kisten, Kartons, Pakete usw., in verschiedenen Zuständen, beispielsweise geöffnet, halboffen, geschlossen usw., die von oben in einer statischen Umgebung aufgenommen wurden. Dabei verändert sich vorliegend der Hintergrund der Szene nicht. Um möglichst eine Vollständigkeit des Datensatzes zu gewährleisten, wurde vorliegend das Verpackungsmaterial in verschiedenen Positionen, Ausrichtungen und/oder Größen erfassen.

Derart kann eine Generalisierungsfähigkeit der Erkennung der Objekte evaluiert werden. Ferner kann derart eine Probenredundanz vermieden werden. Aus diesem Datensatz sollen nun, wie zuvor bereits beschrieben, einander ähnliche Bilder aussortiert werden, um den Datensatz von unerwünschten Redundanzen zu bereinigen. Dabei wird vorliegend nicht auf eine Ähnlichkeit auf einer Ebene der Bildmerkmale abgestellt, da beispielsweise Verpackungsmaterial in dem erfassten Maßstab von oben betrachtet sehr ähnlich erscheinen.

Hingegen wird auf den Inhalt des Verpackungsmaterials abgestellt, wobei vorzugsweise nur die volumetrischen Informationen berücksichtigt werden. Für den Vergleich der Bilder wird, wie zuvor beschrieben, die loU-Metrik eingesetzt, um so als zueinander ähnlich erkannte Verpackungsmaterial-Positions-Anordnungen in einem Bildpaar, das verglichen wird, zu finden.

Fig. 3 zeigt eine schematische Visualisierung redundanter Bilddaten. In dem linken Bild 300 ist ein relevanter Keyframe 302, 303 kreisförmig dargestellt. Der Keyframe 302, 303 repräsentiert ein aktuelles Objekt, das mit einer jeweils gestrichelten Linie 304 in dem rechten Bild 306 verglichen wird. Es handelt sich dabei um eine nicht redundante Änderung, da sich im Beispiel im rechten Bild 306 im Bereich des schematisch angedeuteten weiteren Keyframe 308 kein Objekt befindet. Andererseits überschneidet sich der Keyframe 303 zwischen den beiden Bildern 300, 306, was dadurch angedeutet ist, dass das Bezugszeichen 303 im linken Bild 300 und im rechten Bild 306 eingezeichnet ist. Dabei wurde also ein redundantes Objekt gefunden, so dass das gesamte rechte Bild 306 als redundant bezeichnet wird.

Die in den Bildern 300, 306 angezeigten kleineren Kreise 310 stellen kleinere Objekte dar, die auch für den Redundanzvergleich verwendet werden können. Das als redundant erkannte rechte Bild 306 wird aufgrund des gestrichelten Keyframe 303 bzw. Objekts mit dem vorliegend beschriebenen loU-basierten Algorithmus bzw. durch das vorliegende Verfahren aus dem Bild-Datensatz herausgefiltert.

Fig. 4 zeigt eine schematische Visualisierung nicht-redundanter Bilder. In dem linken Bild 400 ist ein relevanter Keyframe 402, 403 als Kreis angezeigt und repräsentiert den Vergleich aller Objekte mittels der jeweils gestrichelten Linie 404, die das rechte Bild 406 darstellt. Kleinere Frames 408 bzw. kleinere Kreise stellen kleinere Objekte dar, die auch für den Redundanzvergleich verwendet werden können. Das rechte Bild 406 wird im Beispiel als nicht redundantes Bild erkannt, da sich kein einziges Objekt zwischen dem linken Bild 400 und dem rechten Bild 406 überschneidet.

## Patentansprüche

1. Verfahren zum Bereinigen eines Bilddatensatzes, der zum Trainieren und/oder Validieren und/oder Testen eines maschinellen Lernmodells verwendet wird, das Verfahren aufweisend die Schritte:
- Bereitstellen (S1) des Bilddatensatzes, aufweisend eine Vielzahl von Bildern;
- Vergleichen (S2) eines, insbesondere vorbestimmten, Vergleichsbildes der eine Vielzahl von Bildern jeweils mit zumindest einem Teil der restlichen Bilder der Vielzahl von Bildern durch Anwenden eines Intersection-over-Union-Filters;
- basierend auf dem Vergleich, Ermitteln (S3) mindestens eines hinsichtlich des Vergleichsbildes redundanten Bildes in zumindest dem Teil der restlichen Bilder der Vielzahl von Bildern; und
- Bereinigen (S4) des Bilddatensatzes durch Entfernen des mindestens einen redundanten Bildes aus der Vielzahl von Bildern.

2. Verfahren nach Anspruch 1, wobei das Anwenden des Intersection-over-Union-Filters ein Vergleichen mindestens eines Keyframes, der mindestens ein Objekt in dem mindestens einen Vergleichsbild umfasst, mit einem Keyframe, der vorzugsweise an derselben Position wie in dem Vergleichsbild gesetzt wird, des jeweils zu vergleichenden Bildes der restlichen Bilder aufweist.

3. Verfahren nach Anspruch 1 oder 2, wobei das Bereitstellen (S1) des Bilddatensatzes ein vorheriges Auswählen von als das mindestens eine Vergleichsbild dienenden Schlüsselbildern aufweist, wobei die Schlüsselbilder redundant sein könnten.

4. Verfahren nach einem der vorstehenden Ansprüche, wobei das Ermitteln (S3) des mindestens einen hinsichtlich des Vergleichsbildes redundanten Bildes in zumindest dem Teil der restlichen Bilder der Vielzahl von Bildern ein Abgleichen der jeweiligen Bilder mit einem vorbestimmten Schwellenwert aufweist.

5. Verfahren nach einem der vorstehenden Ansprüche, wobei das mindestens eine Vergleichsbild aus einer Teilmenge des Bilddatensatzes ausgewählt wird, und das Vergleichsbild mit Bildern einer anderen Teilmenge des Bilddatensatzes verglichen wird.

6. Verfahren nach einem der vorstehenden Ansprüche, wobei die Vielzahl von Bilddaten sequenziell durch einen bildgebenden Sensor erfasst werden.

7. Verfahren zum Trainieren und/oder Validieren und/oder Testen eines maschinellen Lernmodells, das zum Klassifizieren und/oder Segmentieren von Bilddaten bei automatischen Entpackungsmaschinen und/oder bei Fahrzeugen mit mindestens einer autonomen Fahrfunktion und/oder bei der automatischen optischen Inspektion verwendbar ist, das Verfahren aufweisend, Trainieren und/oder Validieren und/oder Testen des maschinellen Lernmodells auf Basis eines bereinigten Bilddatensatzes, der gemäß dem Verfahren nach einem der Ansprüche 1 bis 6 bereinigt ist.

8. Computerprogramm mit Programmcode, um zumindest Teile eines Verfahrens nach einem der Ansprüche 1 bis 7 auszuführen, wenn das Computerprogramm auf einem Computer ausgeführt wird.

9. Computerlesbarer Datenträger mit Programmcode eines Computerprogramms, um zumindest Teile eines Verfahrens nach einem der Ansprüche 1 bis 7 auszuführen, wenn das Computerprogramm auf einem Computer ausgeführt wird.

10. Vorrichtung (100) zum Bereinigen eines Bilddatensatzes, der zum Trainieren und/oder Validieren und/oder Testen eines maschinellen Lernmodells verwendet wird, wobei die Vorrichtung (100) eine Auswerte- und Recheneinrichtung aufweist, die dazu ausgebildet ist, die folgenden Schritte auszuführen:
- Bereitstellen des Bilddatensatzes, aufweisend eine Vielzahl von Bildern;
- Vergleichen eines, insbesondere vorbestimmten, Vergleichsbildes der eine Vielzahl von Bildern jeweils mit zumindest einem Teil der restlichen Bilder der Vielzahl von Bildern durch Anwenden eines Intersection-over-Union-Filters;
- basierend auf dem Vergleich, Ermitteln mindestens eines hinsichtlich des Vergleichsbildes redundanten Bildes in zumindest dem Teil der restlichen Bilder der Vielzahl von Bildern; und
- Bereinigen des Bilddatensatzes durch Entfernen des mindestens einen redundanten Bildes aus der Vielzahl von Bildern.

## Geänderte Patentansprüche

### Geänderte Patentansprüche gemäss Regel 137(2) EPÜ.

1. Verfahren zum Bereinigen eines Bilddatensatzes, der zum Trainieren und/oder Validieren und/oder Testen eines maschinellen Lernmodells verwendet wird, das Verfahren aufweisend die Schritte:
- Bereitstellen (S1) des Bilddatensatzes, aufweisend eine Vielzahl von Bildern;
- Vergleichen (S2) eines, insbesondere vorbestimmten, Vergleichsbildes der eine Vielzahl von Bildern jeweils mit zumindest einem Teil der restlichen Bilder der Vielzahl von Bildern durch Anwenden eines Intersection-over-Union-Filters, für den ein Schwellenwert festgesetzt ist, wobei das Anwenden des Intersection-over-Union-Filters ein Vergleichen mindestens eines Keyframes (302, 303, 308, 402, 403), der mindestens ein Objekt in dem mindestens einen Vergleichsbild umfasst, mit einem Keyframe (302, 303, 308, 402, 403), der an derselben Position wie in dem Vergleichsbild gesetzt wird, des jeweils zu vergleichenden Bildes der restlichen Bilder aufweist;
- basierend auf dem Schwellenwert, Ermitteln (S3) mindestens eines hinsichtlich des Vergleichsbildes redundanten Bildes (306, 310) in zumindest dem Teil der restlichen Bilder der Vielzahl von Bildern; und
- Bereinigen (S4) des Bilddatensatzes durch Entfernen des mindestens einen redundanten Bildes aus der Vielzahl von Bildern.

2. Verfahren nach Anspruch 1, wobei das Bereitstellen (S1) des Bilddatensatzes ein vorheriges Auswählen von als das mindestens eine Vergleichsbild dienenden Schlüsselbildern aufweist, wobei die Schlüsselbilder redundant sein könnten.

3. Verfahren nach einem der vorstehenden Ansprüche, wobei das Ermitteln (S3) des mindestens einen hinsichtlich des Vergleichsbildes redundanten Bildes in zumindest dem Teil der restlichen Bilder der Vielzahl von Bildern ein Abgleichen der jeweiligen Bilder mit einem vorbestimmten Schwellenwert aufweist.

4. Verfahren nach einem der vorstehenden Ansprüche, wobei das mindestens eine Vergleichsbild aus einer Teilmenge des Bilddatensatzes ausgewählt wird, und das Vergleichsbild mit Bildern einer anderen Teilmenge des Bilddatensatzes verglichen wird.

5. Verfahren nach einem der vorstehenden Ansprüche, wobei die Vielzahl von Bilddaten sequenziell durch einen bildgebenden Sensor erfasst werden.

6. Verfahren zum Trainieren und/oder Validieren und/oder Testen eines maschinellen Lernmodells, das zum Klassifizieren und/oder Segmentieren von Bilddaten bei automatischen Entpackungsmaschinen und/oder bei Fahrzeugen mit mindestens einer autonomen Fahrfunktion und/oder bei der automatischen optischen Inspektion verwendbar ist, das Verfahren aufweisend, Trainieren und/oder Validieren und/oder Testen des maschinellen Lernmodells auf Basis eines bereinigten Bilddatensatzes, der gemäß dem Verfahren nach einem der Ansprüche 1 bis 5 bereinigt ist.

7. Computerprogramm mit Programmcode, um zumindest Teile eines Verfahrens nach einem der Ansprüche 1 bis 6 auszuführen, wenn das Computerprogramm auf einem Computer ausgeführt wird.

8. Computerlesbarer Datenträger mit Programmcode eines Computerprogramms, um zumindest Teile eines Verfahrens nach einem der Ansprüche 1 bis 6 auszuführen, wenn das Computerprogramm auf einem Computer ausgeführt wird.

9. Vorrichtung (100) zum Bereinigen eines Bilddatensatzes, der zum Trainieren und/oder Validieren und/oder Testen eines maschinellen Lernmodells verwendet wird, wobei die Vorrichtung (100) eine Auswerte- und Recheneinrichtung aufweist, die dazu ausgebildet ist, die folgenden Schritte auszuführen:
- Bereitstellen des Bilddatensatzes, aufweisend eine Vielzahl von Bildern;
- Vergleichen eines, insbesondere vorbestimmten, Vergleichsbildes der eine Vielzahl von Bildern jeweils mit zumindest einem Teil der restlichen Bilder der Vielzahl von Bildern durch Anwenden eines Intersection-over-Union-Filters, für den ein Schwellenwert festgesetzt ist, wobei das Anwenden des Intersection-over-Union-Filters ein Vergleichen mindestens eines Keyframes (302, 303, 308, 402, 403), der mindestens ein Objekt in dem mindestens einen Vergleichsbild umfasst, mit einem Keyframe (302, 303, 308, 402, 403), der an derselben Position wie in dem Vergleichsbild gesetzt wird, des jeweils zu vergleichenden Bildes der restlichen Bilder aufweist;
- basierend auf dem Schwellenwert, Ermitteln mindestens eines hinsichtlich des Vergleichsbildes redundanten Bildes in zumindest dem Teil der restlichen Bilder der Vielzahl von Bildern; und
- Bereinigen des Bilddatensatzes durch Entfernen des mindestens einen redundanten Bildes (306, 310) aus der Vielzahl von Bildern.
